Europäisches Patentamt

European Patent Office

Office européen des brevets

(19)

(11) Veröffentlichungsnummer: **0 274 070**
**B1**

(12) ## EUROPÄISCHE PATENTSCHRIFT

(45) Veröffentlichungstag der Patentschrift: 30.01.91

(21) Anmeldenummer: 87118207.7

(22) Anmeldetag: 09.12.87

(51) Int. Cl.⁵: **B 67 C 9/00,** B 67 D 3/00,
G 01 F 11/04

(54) **Dosiereinsatz für einen Hals einer Flasche, zur Ausgabe von zähflüssigen oder viskosen Medien.**

(30) Priorität: 24.12.86 DE 3644430

(43) Veröffentlichungstag der Anmeldung:
13.07.88 Patentblatt 88/28

(45) Bekanntmachung des Hinweises auf die
Patenterteilung:
30.01.91 Patentblatt 91/05

(84) Benannte Vertragsstaaten:
AT BE CH DE ES FR GB GR IT LI LU NL SE

(56) Entgegenhaltungen:
DE-C- 238 921
GB-A-2 053 850
US-A-1 560 689
US-A-2 141 870
US-A-2 900 116
US-A-2 904 227

**Die Akte enthält technische Angaben, die nach
dem Eingang der Anmeldung eingereicht
wurden und die nicht in dieser Patentschrift
enthalten sind.**

(73) Patentinhaber: **AHK Alkohol Handelskontor
GmbH & Co. KG
Wiedenbrückerstrasse 35-39
D-4780 Lippstadt (DE)**

(72) Erfinder: **Schuster, Wilhelm
Georg-Speyer-Strasse 64
D-6000 Frankfurt/Main (DE)**

(74) Vertreter: **Grussdorf, Jürgen, Dr. et al
Patentanwälte Zellentin & Partner
Rubensstrasse 30
D-6700 Ludwigshafen (DE)**

Courier Press, Leamington Spa, England.

**Beschreibung**

Die Erfindung betrifft einen Dosiereinsatz für einen Hals einer Flasche, zur Ausgabe von zähflüssigen oder viskosen Medien.

Dosiereinsätze für Flaschenhälse zur dosierten Ausgabe von Flüssigkeiten sind bekannt. So beschreibt die EP-A-0208941 einen solchen Einsatz, bei dem das Schließelement ein Dosierkegel ist, dessen spezifisches Gewicht größer ist als das spezifische Gewicht des auszugebenden Mediums, und das entlang einer Führung aus einer Ruhestellung in eine Schließstellung bewegbar ist. Bei diesem Dosiereinsatz ist die Führung die Innenwand eines mit Ausnehmung versehenen Dosiergehäuses, das mit Paßsitz in den Flaschenhals eingesetzt wird.

Aus der DE-C 238 921 ist ein Abschlußventil aus einem als Gewicht ausgebildeten Kolben mit einem kegelförmigen Ansatz bekannt. Von der Spitze des Kegels steht eine starre Ventilspindel ab, an deren freiem Ende ein kugelabschnittförmiges Abschlußventil sitzt. Durch eine Austrittsöffnung in einer kegelförmig gestalteten Deckplatte eines zylindrischen Aufsatzes des Flaschendeckels ist eine Austrittsöffnung vorgesehen. Durch diese ist die Ventilspindel gesteckt, derart, daß das Abschlußventil über die kegelförmige Deckplatte ragt. Der Querschnitt des Kolbens entspricht dem Querschnitt des Aufsatzes. Durch diese Anordnung kann sich der Kolben frei hin und her bewegen, wenn das Schließelement in Schließstellung ist. Wird der mit der auszugebenden Flüssigkeit gefüllte Behälter schräg gestellt oder umgekippt, verbleibt das Abschlußventil auf seinem Sitz, solange der Behälter nicht völlig umgestülpt ist. Bei völlig umgestülpten Behälter löst sich das Abschlußventil aus dem Sitz und gibt die Austrittsöffnung frei.

Eine weitere Art eines Schließelements ist der US-A-2 141 870 zu entnehmen, bei dem eine Ventilscheibe auf einem mit Schraubengang versehenen Bolzen aufgefädelt ist. Ein Stift der Ventilscheibe greift in die Schraubengänge ein, derart, daß sich die Scheibe frei um den Bolzen drehen und sich daran entlang bewegen kann. Der Bolzen und mit diesem die Ventilscheibe ist in einem Rohr eingesetzt, das an dem in die Flasche ragenden Ende verschlossen ist und einen Anschlag für die Ventilscheibe in Ruhestellung bildet.

Diese bekannten Ausführungen von Abschlußventilen sind für flüssige Medien vorgesehen und eignen sich nicht zur dosierten Ausgabe von zähflüssigen oder viskosen Medien, wie Duschoder Badeschaum, Geschirrspülmitteln, Waschzusatzmitteln und dergleichen. Zur Dosierung solcher Medien werden daher Verschlußkappen verwendet, die als Dosierbehälter gestaltet sind. Das zähe oder viskose Medium wird in den Dosierbehälter gefüllt und aus diesem ausgegossen. Dabei bleiben aber immer Reste der Masse im Behälter, die beim Wiederaufsetzen oder Aufschrauben der Verschlußkappe auf den Flaschenhals nicht nur diesen, sondern auch die Außenwand der Flasche verunreinigen. Deshalb wird oft auf den Gebrauch einer solchen Dosierkappe verzichtet.

Aufgabe der Erfindung ist es, einen Dosiereinsatz der eingangs genannten Art zu schaffen, der in einfacher Weise die Entnahme einer für den Gebrauch tatsächlich benötigten Menge ermöglicht, ohne daß der Flaschenhals und die Flaschenaußenwand verschmiert werden.

Diese Aufgabe wird mit einem Dosiereinsatz mit den im Anspruch 1 gekennzeichneten Kombinationsmerkmalen gelöst.

Zweckmäßige Weiterbildungen des Dosiereinsatzes sind in den Unteransprüchen gekennzeichnet.

Mit einem solchen Dosiereinsatz kann der Verbraucher durch einfaches Umdrehen der Flasche und Ausüben von Preßdruck auf die Flaschenwandung die dosierte Menge entnehmen.

Das Schließelement, das in seiner Ruhestellung auf dem Teller des Führungsbolzens sitzt, gleitet beim Umdrehen der Flasche am Führungsbolzen nach unten, bis er in seiner Endstellung an den Ringsitz an der Umfangskante des zylindrischen Körpers stößt, diesen verschließt und damit ein weiteres Ausfließen des Mediums verhindert. Wenn die Flasche aufgerichtet wird, gleitet das Schließelement wieder nach unten in seine Ausgangsstellung zurück und das Medium fließt in der Flasche langsam wieder hinunter. Der Verbraucher kann auf diese einfache Weise leicht dosieren und ist nicht versucht, übermäßige Mengen des Mediums zu verwenden, insbesondere da sowohl der Flaschenhals als auch die Flaschenaußenwand sauber bleiben.

Die Erfindung wird anhand eines in den Zeichnungen dargestellten Ausführungsbeispiels näher erläutert. Es zeigen:

Fig. 1 eine Längsschnittansicht eines in einen Flaschenhals eingesetzten Dosiereinsatzes mit dem Schließelement in Ruhestellung;

Fig. 2 eine der Fig. 1 entsprechende Längsschnittansicht, mit dem Dosiereinsatz in Schließstellung;

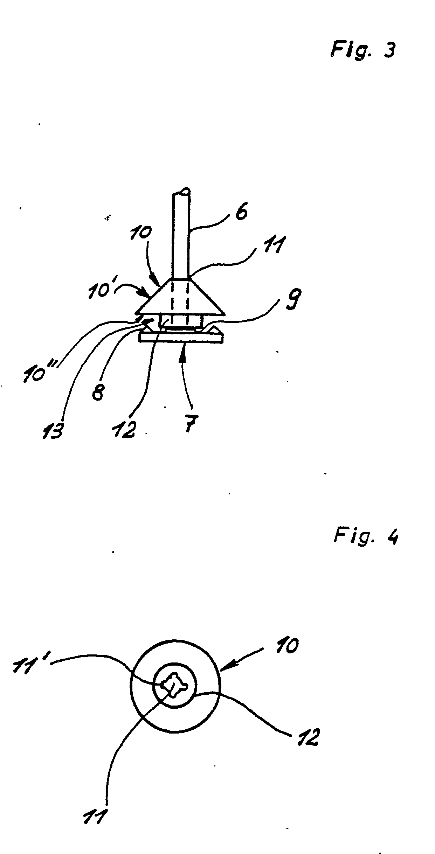

Fig. 3 eine Teilansicht des Dosiereinsatzes; und

Fig. 4 eine Unteransicht des Schließelements.

Der Dosiereinsatz besteht aus drei Teilen, nämlich einem zylindrischen Körper 1 mit einem Führungsbolzen 6, einem am Führungsbolzen 6 befestigten Teller 7 und einem auf den Führungsbolzen aufgeschobenen Schließelement 10.

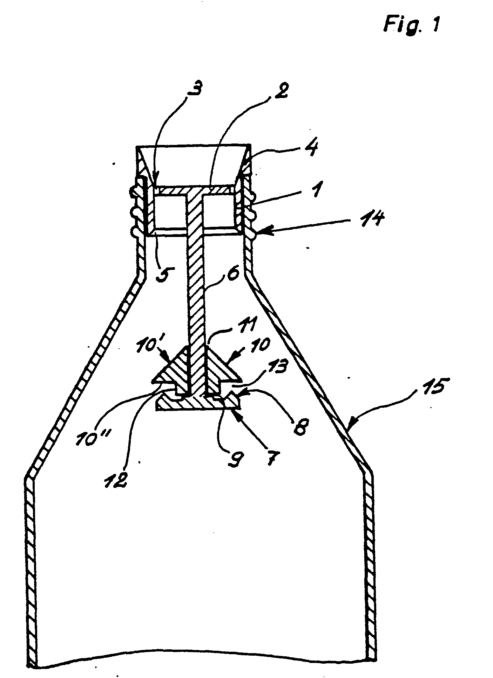

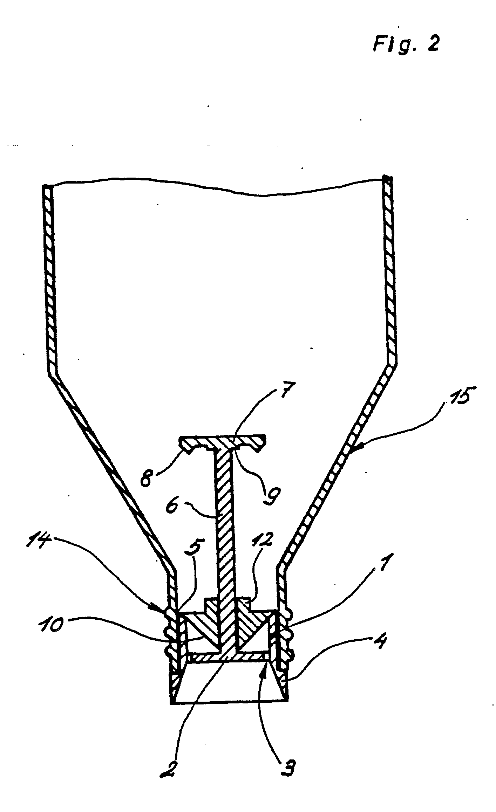

Der zylindrische Körper 1 wird in einen Hals 14 einer Flasche 15 die fragmentarisch in den Figuren 1 und 2 dargestellt ist, eingesetzt. Die Oberseite des zylindrischen Körpers 1 ist durch eine Deckplatte 2 verschlossen, die mindestens eine Austrittsöffnung 3 für das auszugebende zähflüssige oder viskose Medium aufweist. Der Querschnitt der Austrittsöffnung oder Austrittsöffnungen soll nicht zu groß sein, um ein zu rasches Ausfließen des Mediums zu verhindern. Die Wand des zylindrischen Körpers 1 ist hochgezogen, derart, daß sie über die Deckplatte 2 vorsteht. Am oberen Rand des hochgezogenen Teils des zylindrischen Körpers 1 ist eine nach außen vorstehende Auskragung 4 angeformt. Diese Auskragung 4 sitzt nach dem Einpassen des zylindrischen Körpers 1 auf dem freien Rand des Flaschenhalses 14 und verhindert das Einrutschen des Dosiereinsatzes in das Flascheninnere. Die Innenwand des über die Deckplatte 2 vorstehenden Teils des zylindrischen Körpers 1 ist vorzugsweise konisch erweitert, um das Ausgießen und Ausfließen der zähen oder viskosen Masse zu erleichtern.

Mittig von der Innenseite der Deckplatte 2 des zylindrischen Körpers 1 steht ein Führungsbolzen 6 für das Schließelement 10 ab. Am freien Ende des Führungsbolzen 6 ist ein Teller 7 befestigt, der die Abwärtsbewegung des am Führungsbolzens 6 gleitenden Schließelements 10 begrenzt. Der Umfangsrand 8 des Tellers 7 steht über dessen Oberseite vor und weist vorzugsweise einen dreieckigen Querschnitt auf. In der Mitte der Oberseite des Tellers 7 oder an dem an diese Oberseite grenzenden Abschnitt des Führungsbolzens 6 ist ein Anschlag 9 vorgesehen, der für einen kleinen Abstand zwischen der Oberseite des Tellers 7 und dem hier aufsitzenden Schließelement 10 sorgt.

Das Schließelement 10, dessen spezifisches Gewicht größer ist als das spezifische Gewicht des zu entnehmenden Mediums, weist einen Kegel 10' auf, dessen Höhe etwa gleich oder etwas kleiner ist als die Innenhöhe des zylindrischen Körpers 1, gegen den der Kegel 10' gerichtet ist. Die konische Wand schließt mit der Grundfläche 10'' des Schließelements 10 einen spitzen Winkel ein. An der Grundfläche 10'' ist mittig ein Ansatz 12 vorgesehen, der höher ist als der nach oben abstehende Umfangsrand 8 des Tellers 7 des Führungsbolzens 6. In Ruhestellung des Schließelements 10 sitzt die Unterseite dieses Ansatzes 12 auf dem Anschlag 9, der einen kleineren Durchmesser hat als der Ansatz 12. Auf diese Weise ist zwischen der Unterseite des Ansatzes 12 und der Oberseite des Tellers 7 ein kleiner freier Abstand. In diesem Raum sammelt sich nach jedem Dosiervorgang eine geringe Menge des zähflüssigen Mediums, die verhindert, daß das Schließelement 10 fest am Teller haftet. Das hier nur durch Adhäsionskräfte gehaltene Schließelement 10 kann durch Scherkräfte, Schwerkräfte und Druck aus der Ruhestellung gelöst werden. Solche Kräfte greifen an der Grundfläche 10'' des Schließelements 10 an. Der Durchmesser des Ansatzes 12 am Schließelement 10 ist kleiner als der Durchmesser des Tellers 7, derart, daß zwischen der Grundfläche 10'' des Schließelements 10 und der Oberseite des Tellers 7 ein offener Raum 13 verbleibt.

Das Schließelement 10 weist eine axiale Bohrung 11 auf, durch die der Führungsbolzen 6 mit Spiel gesteckt ist. Das Schließelement 10 wird auf den Führungsbolzen 6 geschoben, bevor an dessen freiem Ende der Teller 7 befestigt wird. Während des Dosiervorganges gleitet das Schließelement 10 mit Fließgeschwindigkeit am Führungsbolzen 6 entlang. Die Wand der Bohrung 11 im Schließelement 10 weist durchgehende Längsrillen oder Längsnuten 11' auf. Diese sind insbesondere zum Ausspülen der Flasche 15 vorgesehen, um auch noch geringe Mengen und Reste des Mediums entnehmen zu können. Durch die Längsrillen oder -nuten 11' kann Wasser angesaugt werden, das das Medium verdünnt. Durch Druck kann die Ausgabe auch dieser Restmengen erfolgen und die Flasche entleert werden.

Für den Entnahmevorgang wird die Flasche in Ausgießstellung gedreht. Dabei fließt das auszugebende Medium um den erhöhten Umfangsrand 8 des Tellers 7 in den Raum 13 zwischen der Grundfläche 10'' des Schließelements 10 und der Oberseite des Tellers 7. Die dabei auftretenden Scherkräfte und Schwerkräfte drücken auf diese Grundfläche 10'' und heben das Schließelement 10 aus seiner Ruhestellung, der dann mit Fließgeschwindigkeit am Führungsbolzen 6 nach unten gleitet, bis er den Ringsitz 5 am zylindrischen Körper 1 erreicht hat und ein weiteres Abfließen des Mediums verhindert.

## Patentansprüche

1. Dosiereinsatz für einen Hals einer Flasche, zur Ausgabe von zähflüssigen oder viskosen Medien, bei dem

ein als Kegel (10') gestaltetes Schließelement (10), dessen spezifisches Gewicht größer ist als das spezifische Gewicht des auszugebenden Mediums, entlang einer Führung bewegbar ist,

das Schließelement (10) eine axiale Bohrung (11) aufweist, durch die ein Führungsbolzen (6) gesteckt ist, an dem das Schließelement (10) aus einer durch einen Anschlag (9) bestimmten Ruhestellung in eine Schließstellung bewegbar ist,

der Führungsbolzen (6) mittig von einem mit Paßsitz in den Flaschenhals einsetzbaren zylindrischen Körper (1) absteht, der mindestens eine Austrittsöffnung (3) aufweist und dessen freie Umfangskante einen Ringsitz für das Schließelement (10) bildet,

der zylindrische Körper (1) eine mit der Austrittsöffnung (3) versehene Deckplatte (2) aufweist, an der der Führungsbolzen (6) angeordnet und an dessen freiem Ende ein Teller (7) befestigt ist, der mit einem erhöhten gegen das Schließelement (10) gerichteten Umfangsrand (8) und auf seiner Oberseite mit dem Anschlag (9) versehen ist,

die Grundfläche (10'') des gegen den zylindrischen Körper (1) gerichteten Kegels (10') etwa dem Außendurchmesser des zylindrischen Körpers (1) und der Kegel (10') etwa der Innenhöhe des zylindrischen Körpers (1) entspricht oder kürzer ist als diese, und von der Grundfläche (10'') ein mittiger Ansatz (12) absteht, der in Ruhestellung des Schließelements (10) auf dem Anschlag (9) im Abstand von der Oberseite des Tellers (7) sitzt.

2. Dosiereinsatz nach Anspruch 1, dadurch gekennzeichnet, daß der erhöhte Umfangsrand (8) des Tellers (7) einen dreieckigen Querschnitt aufweist.

3. Dosiereinsatz nach Anspruch 1 und 2, dadurch gekennzeichnet, daß der erhöhte Umfangsrand (8) des Tellers (7) höher ist als der durch den Anschlag (9) bestimmte Abstand für den Sitz des Schließelements (10) in Ruhestellung, und der Ansatz (12) an der Grundfläche (10'') des Schließelements (10) höher ist als der Umfangsrand (8) des Tellers (7).

4. Dosiereinsatz nach Anspruch 1, dadurch gekennzeichnet, daß der Anschlag (9) für den Sitz des Schließelements (10) in Ruhestellung durch einen auf der Oberseite des Tellers (7) angeformten mittigen Abstandsring gebildet ist.

5. Dosiereinsatz nach Anspruch 1, dadurch gekennzeichnet, daß die Wand der Bohrung (11) des Schließelements (10) durchgehende Längsrillen oder Längsnuten (11') aufweist.

**Revendications**

1. Embout de dosage pour un goulot de bouteille, destiné à distribuer des matières épaisses ou visqueuses, sur lequel:

un élément de fermeture (10) constitué en forme de cône (10'), dont le poids spécifique est supérieur au poids spécifique de la matière à distribuer, est mobile le long d'un guidage,

l'élément de fermeture (10) présente un perçage axial (11) dans lequel est enfoncée une tige de guidage (6) sur laquelle l'élément de fermeture (10) peut être déplacé d'une position de repose déterminée par une butée (9) en une position de fermeture,

la tige de guidage (6) part du milieu d'un corps cylindrique (1) montable avec ajustement dans le goulot de la bouteille, qui présente au moins une ouverture de sortie et dont le bord périphérique libre constitue un siège annulaire pour l'élément de fermeture (10),

le corps cylindrique (1) à présente une plaque de recouvrement (2) pourvue de l'ouverture de sortie (3), sur laquelle est disposée la tige de guidage (6) et à l'extrémité libre de laquelle est fixé un disque (7), qui est pourvu d'un bord d'entourage exhaussé dirigé vers l'élément de fermeture (10), et sur sa face supérieure de la butée (9),

la surface de base (10'') du cône (10') dirigé vers le corps cylindrique (1) correspond sensiblement au diamètre extérieure du corps cylindrique (1) et le cône (10') correspond sensiblement à la hauteur intérieure du bord cylindrique (8) ou est plus court que celle-ci, tandis qu'un appendice central (12) part de la surface de base (10'') et s'appuie, en position de repos de l'élément de fermeture (10) sur la butée (9), à quelque distance de la face supérieure du disque (7).

2. Embout de dosage selon la revendication 1, caractérisé en ce que le bord périphérique (8) exhaussé du disque (7) présente une section triangulaire.

3. Embout de dosage selon les revendications 1 et 2, caractérisé en ce que le bord périphérique (8) exhaussé du disque (7) est d'une hauteur supérieure à la distance déterminée par la butée (9) pour le siège de l'élément de fermeture en position de repos et en ce que l'appendice (12) de la surface de base (10'') de l'élément de fermeture (10) est plus élevé que le bord périphérique (8) du disque (7).

4. Embout de dosage selon la revendication 1, caractérisé en ce que la butée (9) du siège de l'élément de fermeture (10) est constituée par une bague d'écartement aménagée en position centrée sur la face supérieure du disque (7).

5. Embout de dosage selon la revendication 1, caractérisé en ce que la paroi du perçage (11) de l'élément de fermeture (10) présente des nervures longitudinales ou des rainures longitudinales (11') continues.

**Claims**

1. Dosing insert for a neck of a bottle for the delivery of semiliquid or viscous media in which a closure element (10) made as cone (10'), the specific weight of which is greater than the specific weight of medium to be delivered, is movable along a guide, the closure element (10) has an axial bore (11) through which is passed a guide shaft (6) on which the closure element (10) is movable from a resting position determined by a stop (9) into a closure position, the guide shaft (6) projects centrally from a cylindrical body (1), insertable with snug fit in the bottle neck, which has at least one opening (3) and the free circumferential edge of which has a ring seating for the closure element (10), the cylindrical body (1) has a cover plate (2), provided with the outlet opening (3), on which the guide shaft (6) is arranged and on the free end of which is fixed a plate (7) which is provided with a raised circumferential edge (8) directed towards the closure element (10) and is provided on its upper side with a stop (9), the base surface (10'') of the cone (10') directed towards the cylindrical body (1) corresponds approximately to the outer diameter of the cylindrical body (1) and the cone (10') approximately to the inner height of the cylindrical body (1) or is shorter than this and, from the base surface (10'') there projects a central projection (12) which, in the resting position of the closure element (10), sits on the stop (9) at a distance from the upper side of the plate (7).

2. Dosing insert according to claim 1, characterised in that the raised circumferential edge (8) of the plate (7) has a triangular cross-section.

3. Dosing unit according to claims 1 and 2, characterised in that the raised circumferential edge (8) of the plate (7) is higher than the distance determined by the stop (9) for the seating of the closure element (10) in the resting position and the projection (12) on the base surface (10'') of the closure element (10) is higher than the circumferential edge (8) of the plate (7).

4. Dosing unit according to claim 1, characterised in that the stop (9) for the seating of the closure element (10) in the resting position is formed by a central distance ring formed on the upper side of the plate (7).

5. Dosing unit according to claim 1, characterised in that the wall of the bore (11) of the closure element (10) has continuous longitudinal slots or longitudinal grooves (11').

Fig. 1

Fig. 2

*Fig. 3*

*Fig. 4*